(19) **Europäisches Patentamt**
**European Patent Office**
**Office européen des brevets**

(11) **EP 4 109 927 B1**

(12) **EUROPEAN PATENT SPECIFICATION**

(45) Date of publication and mention
of the grant of the patent:
**22.04.2026 Bulletin 2026/17**

(21) Application number: **21187639.6**

(22) Date of filing: **26.07.2021**

(51) International Patent Classification (IPC):
***H04R 17/02*** (2006.01)    ***H04R 7/26*** (2006.01)
***H04R 7/18*** (2006.01)    ***H04R 17/10*** (2006.01)
***H04R 1/04*** (2006.01)

(52) Cooperative Patent Classification (CPC):
**H04R 17/02;** H04R 1/04; H04R 7/18; H04R 7/26;
H04R 17/10; H04R 2201/003; H04R 2410/03

(54) **COMBINED CORRUGATED PIEZOELECTRIC MICROPHONE AND CORRUGATED PIEZOELECTRIC VIBRATION SENSOR**

KOMBINIERTES GEWELLTES PIEZOELEKTRISCHES MIKROFON UND GEWELLTER PIEZOELEKTRISCHER SCHWINGUNGSSENSOR

MICROPHONE PIÉZOÉLECTRIQUE ONDULÉ COMBINÉ ET CAPTEUR DE VIBRATIONS PIÉZOÉLECTRIQUE ONDULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2021 US 202117354412**

(43) Date of publication of application:
**28.12.2022 Bulletin 2022/52**

(73) Proprietor: **Infineon Technologies AG**
**85579 Neubiberg (DE)**

(72) Inventors:
• **BRETTHAUER, Christian**
**81675 München (DE)**
• **GOSWAMI, Somu**
**81543 München (DE)**
• **HERRMANN, Matthias Friedrich**
**81737 München (DE)**

• **LORENZ, Gunar**
**82041 München (DE)**
• **MISHRA, Pradyumna**
**San Jose, 95126 (US)**
• **NEUMAIER, Daniel**
**9560 Feldkirchen (AT)**
• **TUMPOLD, David**
**85551 Kirchheim b. München (DE)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A2- 3 923 602**    **US-A1- 2004 020 292**
**US-A1- 2019 016 588**

# Description

## TECHNICAL FIELD

The present invention relates generally to a combined corrugated piezoelectric microphone and corrugated piezoelectric vibration sensor.

## BACKGROUND

Microelectromechanical transducers play a central role in modern electronics both as sensors and also as actuators and are used in a multiplicity of different applications, for example as microphones, loudspeakers, pressure sensors or acceleration sensors.

Microelectromechanical transducers can have a membrane, which can be displaced in a passive or active manner depending on whether the transducers are formed as sensors or actuators. In the case of a microelectromechanical transducer formed as a sensor, the membrane can be displaceable in a passive manner, for example by sound to be detected or an acceleration to be detected. Characteristics of the variable to be detected, such as a sound frequency, a sound amplitude or a temporal acceleration profile, can be ascertained from a displacement of the membrane. In the case of a microelectromechanical transducer formed as an actuator, the membrane can be displaced in an active manner, for example in order to generate sound in a loudspeaker.

Such membranes of microelectromechanical transducers can be formed at least in sections from a piezoelectric material, in which, in the case of a passive displacement of the membrane, a voltage is induced, which can be read out by a suitable read-out circuit in order to ascertain characteristics of a variable to be detected. Alternatively, in the case of an actuator, a voltage can be applied to the membrane in order to bring about a targeted deformation of the membrane, for example in order to generate sound. Patent document EP 3 923 602 A2 represents prior art according to Article 54(3) EPC and relates to a corrugated piezoelectric vibration sensor.

US2019016588 shows a MEMS microphone having a corrugated membrane that is split into eight parts. Piezo elements generate according signals. An inertial mass is connected to the diaphragm to enhance the excursion of the diaphragm in response to movements.

US2004020292 shows a MEMS accelerometer having a corrugated membrane that is split into four parts. Piezo elements generate according signals. An inertial mass is connected to the diaphragm to enhance the excursion of the diaphragm in response to movements.

## SUMMARY

The subject-matter of the invention is outlined in the independent claims. Advantageous further developments of the invention are set forth in the dependent claims.

## BRIEF DESCRIPTION OF THE DRAWINGS

For a more complete understanding of the present invention, and the advantages thereof, reference is now made to the following descriptions taken in conjunction with the accompanying drawings, in which:

Figure 1 is a plan view of an exemplary piezoelectric membrane of a microelectromechanical transducer;

Figure 2 is a cross-sectional view of a section of an exemplary piezoelectric membrane of a microelectromechanical transducer;

Figure 3 is a cross-sectional view of a section of another exemplary piezoelectric membrane of a microelectromechanical transducer;

Figure 4 is a simplified cross-sectional view of a corrugated piezoelectric microphone that can be combined with a corrugated piezoelectric vibration sensor according to an embodiment;

Figure 5 is a simplified cross-sectional view of a corrugated piezoelectric vibration sensor that can be combined with a corrugated piezoelectric microphone according to an embodiment;

Figure 6 is a simplified cross-sectional view of a corrugated piezoelectric microphone that can be combined with one or more multiple corrugated piezoelectric vibration sensors according to an embodiment;

Figure 7 is a simplified cross-sectional view of a packaged combined corrugated piezoelectric microphone and corrugated piezoelectric vibration sensor according to an embodiment;

Figure 8 is a simplified cross-sectional view of a packaged combined corrugated piezoelectric microphone and corrugated piezoelectric vibration sensor according to another embodiment;

Figure 9A is plan view and a cross-sectional view of an accelerometer for determining a three-dimensional acceleration direction according to an embodiment;

Figure 9B is a plan view of a vibration sensor having an oval corrugated membrane for determining vibrations in an X-axis or Y-axis direction, and for determining vibrations in a Z-axis direction, according to an embodiment;

Figure 9C is a plan view of a vibration sensor having an oval corrugated membrane for determining vibrations in three directions, according to an embodiment;

Figure 9D is a block diagram of a vibration sensor system including the vibration sensor of Figure 9B and an ASIC for processing signals generated by the vibration sensor;

Figure 9E is a block diagram of a vibration sensor system including the vibration sensor of Figure 9C and an ASIC for processing signals generated by the vibration sensor;

Figure 9F is a block diagram of a method associated with the vibration sensor of Figure 9B, according to an embodiment;

Figure 9G is a block diagram of a method associated with the vibration sensor of Figure 9C, according to an embodiment; and

Figure 10 is a simplified cross-sectional view of a corrugated piezoelectric microphone combined with multiple corrugated piezoelectric vibration sensors having individual resonance frequencies according to an embodiment.

## DETAILED DESCRIPTION OF ILLUSTRATIVE EMBODIMENTS

One or more corrugated piezoelectric membranes are used in a combined microelectricalmechanical system (MEMS) device having a corrugated piezoelectric microphone and a corrugated piezoelectric vibration sensor (transducers). The combined MEMS device can be packaged together with an amplifier or other processing circuitry. The corrugated piezoelectric membrane technology described below is used to provide a robust, stable, manufacturable, and economical MEMS device. In an embodiment, the combination of a corrugated piezoelectric microphone and a piezoelectric membrane based vibration sensor with a center mass can be advantageously manufactured in the same technology and therefore also on the same wafer. In an embodiment, the center mass of the vibration sensor can be formed of bulk silicon, thin film structures, or both. Since the readout principle for both transducers is the same both devices can therefore use the same or similar application-specific integrated circuits (ASICs) or analog frontend circuits, or even share a state-of-the art differential analog microphone ASIC, in embodiments. In the case of using only one single analog differential microphone-ASIC, one sense channel reads the microphone as a single-ended input and the other channel reads the vibration sensor in parallel, also as a single-ended input. The ASIC can thus be cost effective and re-used from existing products. These and other aspects of embodiments of the present invention are described in further detail below.

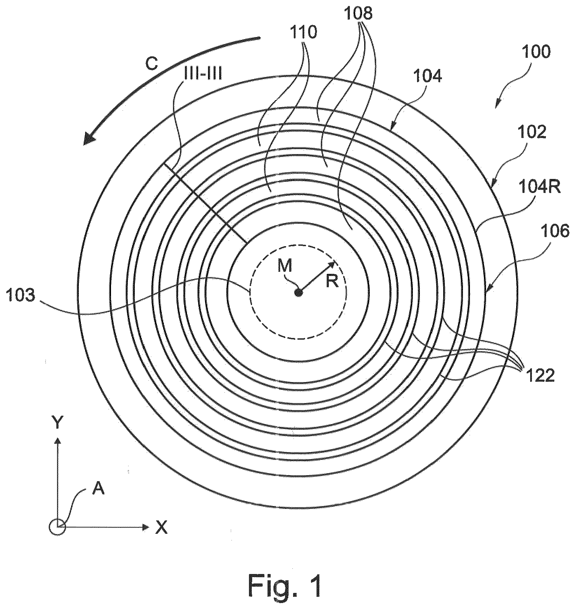

Figure 1 illustrates an exemplary microelectromechanical transducer 100. Microelectromechanical transducer 100 can have a holder 102 and a displaceable membrane 104 secured to the holder 102. At least a part of the membrane 104 can be formed from piezoelectric material. A voltage, which can be measured by a suitable read-out circuit, can be induced in the piezoelectric material by a displacement of the membrane 104. Characteristics of a variable to be detected, such as, for example, sound to be detected or an acceleration to be detected can be ascertained from the measured voltage. Alternatively, a voltage can be applied to the membrane 104 in order to displace the membrane 104, for example in order to generate sound.

If the transducer 100 is formed as an acceleration sensor or as part of an acceleration sensor, an inertial mass 103 can be provided on the membrane 104, for example on a central section of the membrane 104, in order to increase a force exerted on the membrane 104 by an acceleration to be detected. The inertial mass 103 can be formed separately from the membrane 104. Said inertial mass can be formed, for example, from a semiconductor material, such as silicon.

As indicated in Figure 1, the membrane 104 can be secured at its edge region 104R in a circumferential manner to the holder 102. The membrane 104 can be formed as a closed component so that an interruption-free connection exists along the membrane 104 between two arbitrary points of the edge region 104R of the membrane 104. The membrane 104 can consequently be formed in a manner free of fluid passage openings, which can otherwise act as a source of noise when fluid such as, for example, a gas flows through such a fluid passage opening. The lack of a fluid passage opening in the membrane 104 can constitute a considerable advantage over a piezoelectric membrane that has a plurality of cantilevers, which can be deflected independently of one another. A closed membrane 104 is also particularly robust, since any cantilevers react in a particularly sensitive manner to extreme mechanical loadings, which can lead to damage of a membrane having cantilevers, for example in the event of an impact. However, this does not exclude a membrane 104 described here from being able to have one or more openings in order to minimize a resistance, which can be caused by gas, for example air, collected on a side of the membrane 104. This can ensure a high degree of resilience of the membrane 104.

The membrane 104 shown in Figure 1 can be formed as a planar component. The term "planar" essentially means that the membrane 104 has a substantially greater extent along a first spatial direction X and a second spatial direction Y orthogonal to the first spatial direction X than along a third spatial direction, which is orthogonal to the first spatial direction X and to the second spatial direction Y and defines an axial direction A of the membrane 104.

The membrane 104 has an undulated section 106 comprising at least one undulation peak 108 and at least one undulation trough 110 or comprising a plurality of undulation peaks 108 and a plurality of undulation troughs 110. The undulation peaks 108 and the undulation troughs 110 are arranged consecutively in a radial direction R of the membrane 104 in alternating fashion. The undulation peaks 108 or/and the undulation troughs 110 can have a circular or circular-segment-shaped design and be arranged concentrically, for example around a center point M of the membrane 104. A circular-segment-shaped configuration of the undulation peaks 108 and undulation troughs 110 (not shown) permits, for example, a radial laying of feed lines on the membrane 104.

Due to a circular or circular-segment-shaped formation of the undulation peaks 108 or/and undulation troughs 110, the membrane 104 is primarily set up to detect a deflection in the circumferential direction C.

The mechanical stresses discussed above can be compensated for by the provision of the undulated section 106 since the undulated section 106 can function as an elastic element, which can absorb the mechanical stresses discussed at the beginning by extension or compression, as a result of which a deformation of the membrane 104 caused by the mechanical stresses can be limited. This can ensure that the membrane 104 has a well-defined design and is consequently deflected in a well-defined manner, as a result of which reproducible behavior can be achieved.

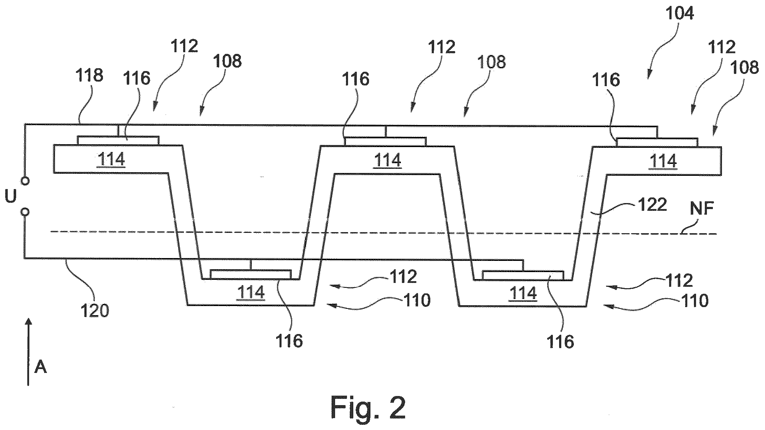

Furthermore, the undulated section 106 of the membrane 104 can be utilized to reduce or to eliminate the compensation of induced electrical fields discussed at the beginning. This is explained below with reference to Figure 2, which shows a section through the membrane 104 along the line III-III shown in Figure 1.

As shown in Figure 2, a piezoelectric unit cell 112 can be provided in each case at a plurality of undulation peaks 108 or/and in a plurality of undulation troughs 110 or even at each undulation peak 108 or/and in each undulation trough 110, which piezoelectric unit cell has a piezoelectric layer 114 and at least one electrode 116 in electrical contact with the piezoelectric layer 114. In the undulated section 106, the neutral fiber NF of the membrane 104 is located in the axial direction A between the undulation peaks 108 and the undulation troughs 110. As a result of this, the membrane 104 is divided in the axial direction A by the neutral fiber NF into two regions, which, in the event of a deflection of the membrane 104, are subjected either to tensile loading or pressure loading. It is thus possible, for example, in the case of a deflection of the membrane 104, for the undulation peaks 108 to be subjected exclusively to tensile loading while the undulation troughs 110 can be subjected exclusively to pressure loading, and vice versa. This has the result that an electrical field with a consistent sign is induced in an undulation peak 108 or an undulation trough 110, so that, in contrast to the conventional piezoelectric membranes discussed at the beginning, no compensation of the electrical field within a piezoelectric layer 114 occurs, which would limit the net voltage that can be tapped. As a result of this, in the case of a prescribed deflection of the membrane 104, a voltage U that is higher compared to conventional piezoelectric transducers can ultimately be tapped, which makes a higher sensitivity compared to conventional microelectromechanical transducers possible. Furthermore, a defined deflection of the membrane 104 can be achieved by applying a voltage to the respective electrodes 116.

The piezoelectric unit cells 112 shown in Figure 2 can have just one single electrode 116, which can be provided on the same side of the respective piezoelectric layers 114. This configuration can make the production of the microelectromechanical transducer 100 particularly simple since the electrodes 116 can be vapor-deposited or/and structured at the same time.

Substantially any electrically conductive material can be used as the material for the electrodes 116, for example a metal, such as aluminum. The piezoelectric layers 114 of the respective piezoelectric unit cells 112 can be produced, for example, from aluminum nitride (AIN), zinc oxide (ZnO) or lead zirconate titanate (PZT).

As indicated in Figure 2, the electrodes 116 of the piezoelectric unit cells 112 provided at the undulation peaks 108 can be electrically connected in parallel with one another by a line 118, while the electrodes 116 of the piezoelectric unit cells 112 provided in the undulation troughs 110 can be electrically connected in parallel with one another by a line 120. In an embodiment, the electrodes 116 of the piezoelectric unit cells 112 can be electrically connected in series. As a result of this, the electrical potentials induced in the respective piezoelectric unit cells 112 at the undulation peaks 108 or in the undulation troughs 110 can be tapped by means of the respective electrodes 116 and subsequently summed, as a result of which a high net voltage U can be tapped.

The piezoelectric layers 114 of the respective piezoelectric unit cells 112 can be formed integrally with one another. As shown in Figures 1 and 2, the piezoelectric layers 114 of two adjacent piezoelectric unit cells 112 can be connected integrally to one another by connecting sections 122, which extend substantially in the axial direction A. Due to the integral formation of the piezoelectric layers 114, the membrane 104 can be produced in a simple manner overall, since, at the same time as the production of the undulated section 106, the piezoelectric layers 114 of the piezoelectric unit cells 112 can also be produced.

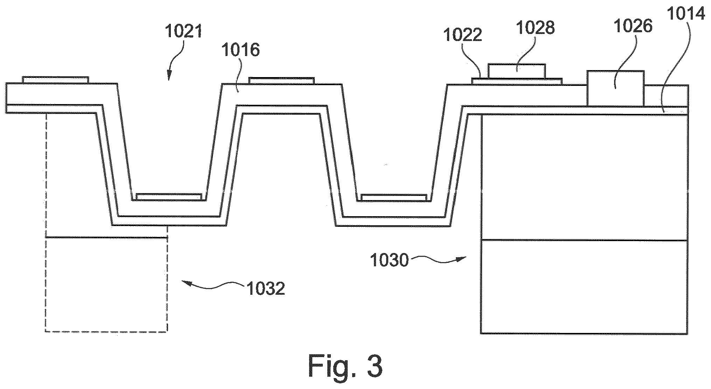

Figure 3 shows a section of a corrugated piezoelectric membrane 1021 coupled to a holder 1030, which is not specifically shown in Figures 1 and 2. Corrugated piezoelectric membrane 1021 comprises an electrically conductive layer 1014, a piezoelectric layer 1016, an electrode 1022, a contact pad 1026, a contact pad 1028, a holder 1030, and an optional inertial mass 1032.

Contact pad 1026 is used for contacting the electrically conductive layer 1014, as shown in Figure 3. Further contact pads 1028 can also be formed at the electrodes 1022 formed on the piezoelectric layer 1016 in order to electrically contact said piezoelectric layer. In the exemplary illustration according to Figure 3, the inertial mass 1032 is provided on an undulated section of the membrane 1021. Said inertial mass can be provided in a central region of the membrane 1021, which central region is not undulated. Figure 3 shows only a section of the membrane 1021, which has an undulated section and a region connected to the holder 1030 that is not undulated.

Further description of corrugated piezoelectric membranes can be found in copending U.S. Patent Application No. 2019/0016588, filed on July 10, 2018.

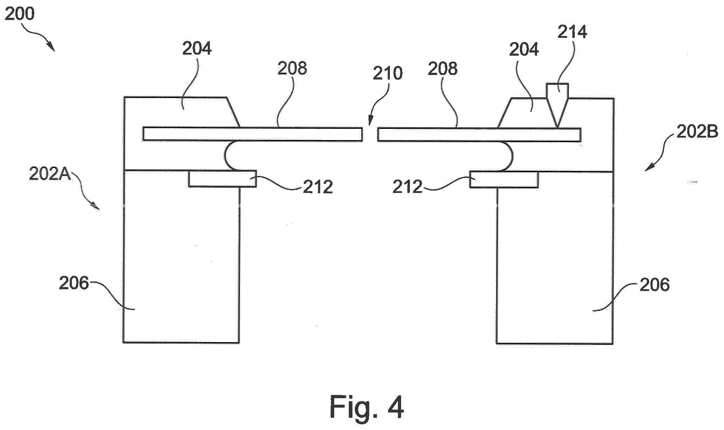

Figure 4 is a simplified cross-sectional view of a corrugated piezoelectric microphone that can be combined with a corrugated piezoelectric vibration sensor according to an embodiment. In the simplified cross-sectional view of Figure 4, the corrugations in corrugated piezoelectric membrane 208 are not actually shown for clarity.

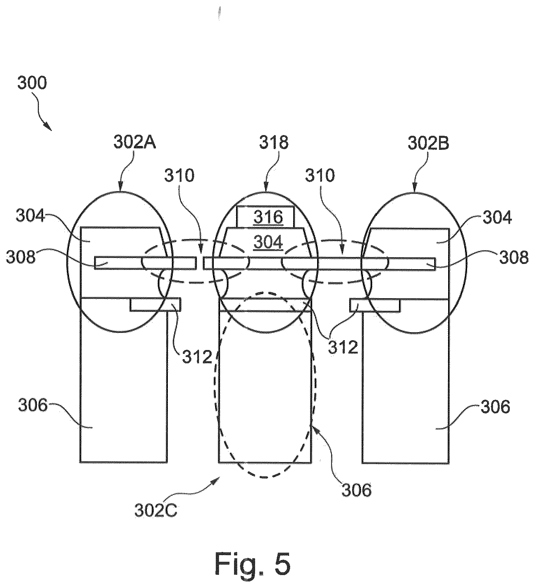

Corrugated piezoelectric microphone 200 includes a first holder or mechanical fixture 202A, a second holder or mechanical fixture 202B, a clamping layer 204, bulk silicon portion 206, a corrugated piezoelectric membrane 208, a ventilation hole 210, a membrane defining layer 212, and a contact pad 214. In an embodiment, the clamping layer 204 can comprise a silicon or dielectric layer. In an embodiment, membrane defining layer 212 defines the amount of the membrane that is exposed and can comprise a metal, silicon, or dielectric layer. Other such corrugated piezoelectric microphones can also be used for combining with a corrugated piezoelectric vibration sensor that is shown in Figure 5 and described below.

Corrugated piezoelectric microphone 200 is used to convert changes in air pressure from above or below corrugated piezoelectric membrane 208 into a corresponding output voltage at contact pad 214. In embodiments, holders 202A and 202B can comprise a bulk silicon portion 206 and a clamping layer 204 disposed over the bulk silicon portion 206, that may comprise one or more silicon or dielectric thin film layers for the purpose of securing end portions of corrugated piezoelectric membrane 208. Ventilation hole 210 is designed to minimize the flow resistance of corrugated piezoelectric membrane 208, and can comprise a pattern of a plurality of ventilation holes 210 in embodiments. For a circular corrugated piezoelectric membrane 208, a circular pattern of ventilation holes 210 can be used. The membrane defining layer 212 can be positioned between the bulk silicon portion 206 and the clamping layer 204 in embodiments and can comprise silicon, dielectric, or metal layers, or combinations of these layers. The purpose of the membrane defining layer 212 is to define an acceptable exposure area of corrugated piezoelectric membrane 208. In certain applications, it may be advantageous to protect the edges of corrugated piezoelectric membrane 208 from direct exposure to changes in air pressure from below in order to protect the structural integrity of membrane 208. The exact lateral extent of membrane defining layer 212 can be changed depending upon the application of corrugated piezoelectric microphone 200. In some embodiments, membrane defining layer 212 is optional and can be eliminated if desired. Contact pad 214 can comprise a metal or metal alloy contact pad formed in an upper portion of clamping layer and in direct contact with an upper surface of corrugated piezoelectric membrane 208 as previously described.

Figure 5 is a simplified cross-sectional view of a corrugated piezoelectric vibration sensor that can be combined with a corrugated piezoelectric microphone according to an embodiment. In the simplified cross-sectional view of Figure 5, the corrugations in corrugated piezoelectric membrane 308 are not actually shown for clarity.

Corrugated piezoelectric vibration sensor 300 includes a first holder or mechanical fixture 302A, a second holder or mechanical fixture 302B, an inertial mass 302C, a clamping layer 304, a bulk silicon portion or bulk mass 306, a corrugated piezoelectric membrane 308, a ventilation hole 310, a membrane defining layer 312, a thin film layer 316, and a thin film mass 318. In an embodiment, the clamping layer 304 can comprise a silicon or dielectric layer. In an embodiment, membrane defining layer 312 defines the amount of the membrane that is exposed and can comprise a metal, silicon, or dielectric layer. The thin film layer can comprise a silicon, oxide, dielectric, or metal layer. Other such corrugated vibration sensors can also be used for combining with a corrugated microphone that is shown in Figure 4 and described above.

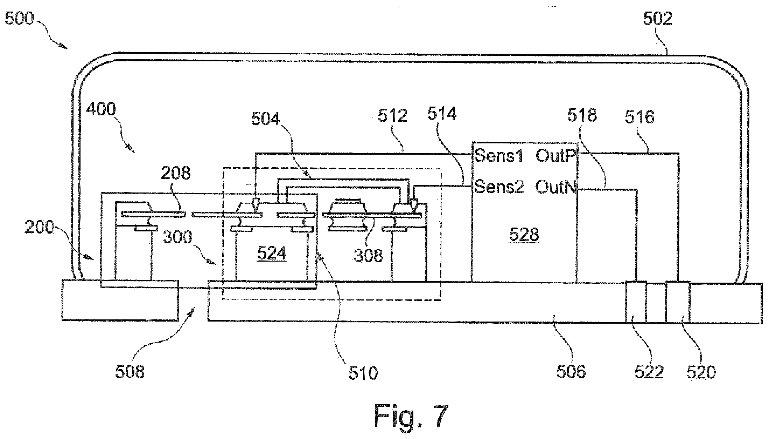

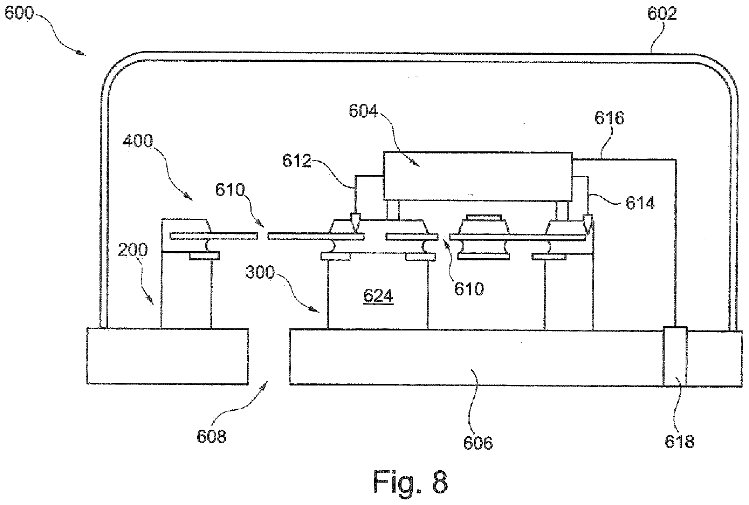

As shown in Figure 5, different layer stacks can be used to provide an inertial mass (proof mass) to the corrugated piezoelectric membrane 308. The inertial mass can comprise bulk mass 306, thin film mass 318, or both. The bulk silicon mass 306 provides the largest mass, which is beneficial to bring down resonance frequency and increase sensitivity of the vibration sensor 300. Thin film mass 318 can include one or more of membrane defining layer 312, clamping layer 304, and thin film layer 316. Thin film mass 318 there can comprise one or more silicon, oxide, dielectric, and/or metal layers. These layers are available in several $\mu$m thicknesses directly from the integration of the piezoelectric microphone. However, thin film masses are smaller than the bulk silicon mass. Therefore in embodiments the combination device may need to be larger to achieve the necessary vibration sensitivity. However, devices with thin film inertial masses may be more robust than devices with bulk silicon inertial masses in some embodiments. By adding an appropriate number of ventilation holes 310 the low-frequency roll-off for pressure coupling can be adjusted up to the kHz range. If further suppression of audio sensitivity of the vibration sensor 300 is needed, a lid may be used to shield the vibration sensor 300 from sound, as is shown in Figures 7 and 8 and described in further detail below.

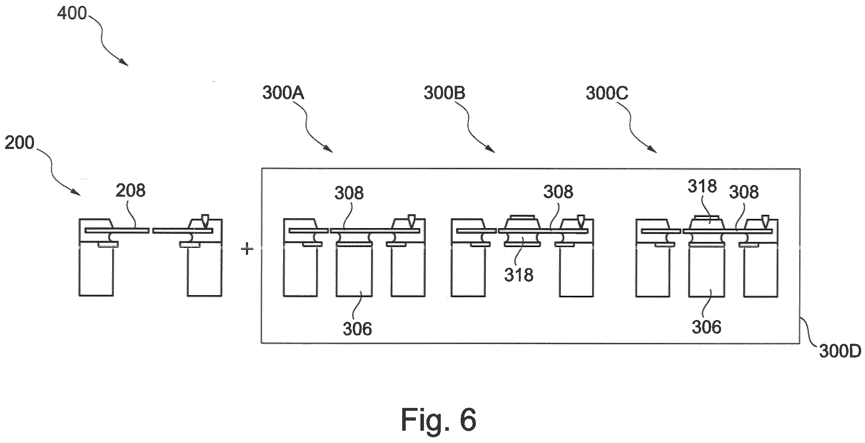

Figure 6 is a simplified cross-sectional view of a corrugated piezoelectric microphone 200 that can be combined with one or more multiple corrugated piezoelectric vibration sensors 300D according to an embodiment to form a combined MEMS structure 400, according to an embodiment. In the simplified cross-sectional view of Figure 5, the corrugations in corrugated piezoelectric membranes 208 and 308 are not actually shown for clarity. Figure 6 thus includes a corrugated piezoelectric microphone 200 that is combinable with a selection of corrugated piezoelectric vibration sensors 300D, which in turn includes a first corrugated piezoelectric vibration sensor 300A having a bulk inertial mass 306, a second corrugated piezoelectric vibration sensor 300B having a thin film inertial mass 318, or a third corrugated piezoelectric vibration sensor 300C having a bulk inertial mass 306 and a thin film inertial mass 318. Further details of the combined MEMS structure 400 are described in further detail below with respect to Figures 7 and 8.

One or more of the selections of corrugated piezoelectric vibration sensors 300D can be combined with corrugated piezoelectric microphone 200 to form a combined MEMS device, according to embodiments. Any of the vibration sensors may be used and applications may take advantage of the different vibration response characteristics of each of the vibration sensors. A first corrugated piezoelectric vibration sensor 300A comprises a bulk inertial mass 306 coupled to the bottom surface of corrugated piezoelectric membrane 308. Corrugated piezoelectric vibration sensor 300A will have a robust vibration response due to the relatively high mass of bulk inertial mass 306. A second corrugated piezoelectric vibration sensor 300AB comprises a thin film inertial mass 318 coupled to the top and bottom surface of corrugated piezoelectric membrane 308. Corrugated piezoelectric vibration sensor 300B may have a lesser vibration response magnitude due to the relatively low mass of thin film inertial mass 318. Piezoelectric vibration sensor 300B, however, may have a different frequency response than corrugated piezoelectric vibration sensor 300A. Finally, A third corrugated piezoelectric vibration sensor 300C comprises a bulk inertial mass 306 coupled to the bottom surface of corrugated piezoelectric membrane 308 and a thin film inertial mass 318 coupled to the top and bottom surface of corrugated piezoelectric membrane 308. Corrugated piezoelectric vibration sensor 300A will have the maximum vibration response magnitude due to the relatively high mass of bulk inertial mass 306 combined with thin film inertial mass 318.

Figure 7 is a simplified cross-sectional view of a packaged combined MEMS structure 500 including the combined MEMS structure 400 including corrugated piezoelectric microphone 200 and corrugated piezoelectric vibration sensor 300 according to an embodiment. In the simplified cross-sectional view of Figure 5, the corrugations in corrugated piezoelectric membranes 208 and 308 are not actually shown for clarity.

In pertinent part, corrugated piezoelectric microphone 200 and corrugated piezoelectric vibration sensor 300 share a shared holder or mechanical fixture 524 to form the combined MEMS structure 400 in an embodiment. While separate corrugated membranes 208 and 308 are shown in Figure 7 each affixed to the shared holder 524, a single combined corrugated membrane can include corrugated membranes 208 and 308 as portions of the single combined corrugated membrane extending through shared holder 524 in an embodiment. While vibration sensor 300 is shown as having a thin film inertial mass, a bulk inertial mass, or a combination of both inertial masses can be used. While only one corrugated piezoelectric microphone 200 and one corrugated piezoelectric vibration sensor 300 are combined in Figure 7, other configurations of microphones and vibration sensors are possible. For example, in an embodiment, one corrugated piezoelectric microphone 200 can be combined with multiple corrugated piezoelectric vibration sensors.

Figure 7 thus shows a packaged combined MEMS structure 500 including a substrate 506 having a sound port 508. In embodiments, substrate 506 can comprise a dielectric, plastic, fiberglass, or any other suitable material. The packaged combined MEMS structure also includes a housing 502 attached to the substrate 506 enclosing an internal volume including the combined MEMS structure 400, an ASIC 528, and internal wiring between the combined MEMS structure 400 and the ASIC 528. The housing 502 can comprise a metal, or layered metal structure, or a structure including insulating or dielectric and metal layers. Any other suitable materials may also be used in embodiments. In an embodiment a wafer bonded lid 504 or other type of lid can be used if the vibration sensor sensitivity is too high leading to cross-talk caused by audio signals entering through sound port 508 and traversing through microphone 200. Corrugated membrane 308 of the corrugated piezoelectric vibration sensor 300 includes at least one ventilation hole 510. By introducing ventilation holes in the vibration sensor, the low frequency roll-off for pressure response can be shifted up to the single digit kHz range, so that unwanted audio sensitivity below this cut-off frequency can be suppressed without a lid 504 if desired, in an embodiment. The ventilation hole and the lid can be used together in embodiments.

Packaged combined MEMS structure 500 also includes ASIC 528, which can be a differential input and differential output ASIC, in an embodiment. Other custom or generally available amplifier integrated circuits can be used in embodiments. ASIC 528 comprises a first input Sens1 input 512 that is coupled to an output of corrugated piezoelectric microphone 200 and a second input Sens2 514. In an embodiment, inputs 512 and 514 can comprise single-ended inputs of a differential input pair. ASIC 528 comprises a first positive output OutP 516 coupled to microphone signal pad 520 that extends through substrate 506, in an embodiment. Microphone signal pad 520 provides an analog microphone output signal, in an embodiment. ASIC 528 comprises a second negative output OutN 518 coupled to vibration sensor signal pad 522 that extends through 506, in an embodiment. Vibration sensor signal pad 522 provides an analog vibration sensor output signal, in an embodiment.

While an embodiment packaged combined MEMS structure 500 has been shown in Figure 7, it will be apparent to those skilled in the art that other combinations and placements of the combined MEMS structure, ASIC 528, signal pads 520 and 522, lid 504, and housing 502 can be envisioned. For example, ASIC 528 can include one or more integrated circuits. Housing 502 can be made to enclose additional components, or to enclose only some of the components shown in Figure 7. Additional signal pads can be used if desired.

Figure 8 is a simplified cross-sectional view of a packaged combined MEMS structure 600 comprising corrugated piezoelectric microphone 200 and corrugated piezoelectric vibration sensor 300 according to another embodiment. In the simplified cross-sectional view of Figure 8, the corrugations in combined MEMS structure 400 are not actually shown for clarity.

Packaged combined MEMS structure 600 includes a housing 602, an ASIC 604, a substrate 606, a sound port 608, and a ventilation hole 610 substantially as shown with respect to packaged combined MEMS structure shown in Figure 7. ASIC 604 includes a microphone signal input 612 coupled to the output of corrugated piezoelectric microphone 200, and a vibration sensor signal input 614 coupled to the output of corrugated piezoelectric vibration sensor 300. Corrugated piezoelectric microphone 200 and corrugated piezoelectric vibration sensor are merged together using shared holder 624 as previously described. ASIC 604 comprises a single output signal 616 coupled to combined MEMS output pad 618. In an embodiment, combined MEMS output pad 618 provides a multiplexed output signal combining the amplified signals on inputs 612 and 614. In an embodiment, combined MEMS structure 400 does not include a lid as previously described, but uses the bottom surface of ASIC 604 instead of a lid. In other words, ASIC 604 provides the amplification functions as well as a shielding function to help isolate corrugated piezoelectric vibration sensor 300 from audio signal inputs through sound port 608 and piezoelectric microphone 200. In Figure 8, ASIC 604 is shown to be mounted on a top surface of corrugated piezoelectric vibration sensor 300.

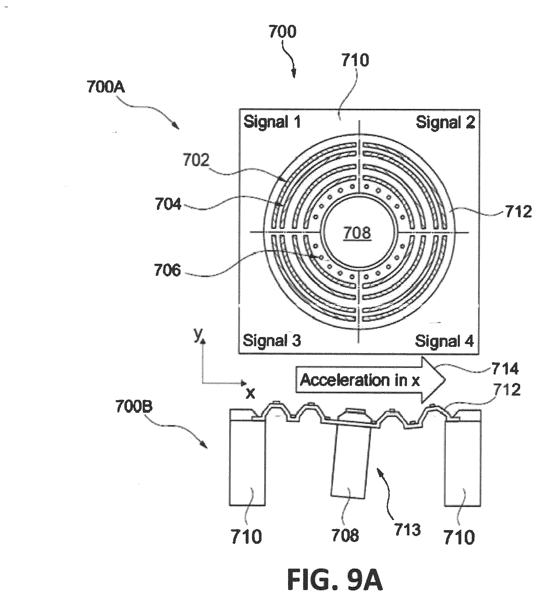

Figure 9A is plan view 700A and a cross-sectional view 700B of a corrugated piezoelectric vibration sensor configured as an accelerometer 700 for determining a three-dimensional acceleration direction according to an embodiment. While accelerometer 700 is shown as a standalone component in Figure 9A, it may be combined with a corrugated piezoelectric microphone 200 into a combined MEMS device if desired, as is explained in further detail below.

In various applications it may be required that vibrations are picked up independently of the orientation of the vibration sensor device. A corrugated membrane, particularly in combination with a long bulk silicon inertial mass according to embodiments, will not only react to accelerations perpendicular to its surface (Z-axis), but due to torque acting on the mass it will also sense in-plane acceleration (X-axis and Y-axis). These accelerations can even be disentangled if a multi-segment electrode design is chosen for accelerometer 700 as shown in Figure 9A. In the example of accelerometer 700, four membrane segments are used and described below. While other numbers of membrane segments can be used, the corresponding acceleration equations set forth below may have to be updated to reflect the number of membrane segments chosen for a particular design.

Accelerometer 700 includes a holder 710 that in an embodiment comprises a single holder coupled to corrugated membrane 712. In other embodiments, multiple individual holders can be used to support corrugated membrane 712. The corrugated membrane 712 has four segments in an embodiment for generating four corresponding signals: Signal 1 (s1), Signal 2 (s2), Signal 3 (s3), and Signal 4 (s4). Each membrane segment includes one or more high electrodes 702, and one or more low electrodes 704. A central portion of corrugated membrane 712 comprises a plurality of ventilation holes 706 that can be used to tune the frequency response and other characteristics of accelerometer 700 according to an embodiment. Any number or pattern of ventilation holes can be used in a particular embodiment. Ventilation flaps and other similar ventilation structures can also be used. Corrugated membrane 712 is coupled to an inertial mass 708 that includes a bulk silicon portion. The greater the inertial mass, the more torque 713 will be generated in accelerometer for a given acceleration. For a thin film layer mass, the output signal for a given acceleration may be considerably smaller. Figure 9A defines the acceleration direction 714 in the X-axis, wherein the Y-axis direction is orthogonal to the X-axis direction in the plane of Figure 9A, and wherein the Z-axis direction is orthogonal to the X-axis direction extending out from the plane of Figure 9A.

By evaluating sums and differences of the four signals (Signal 1, Signal 2, Signal 3, and Signal 4), acceleration in the X, Y, and Z directions can be calculated.

Acceleration in the X-axis direction is determined by the following equations.

$$\text{Signal } 1 = \text{Signal } 3$$

$$\text{Signal } 2 = \text{Signal } 4$$

$$\text{Signal 1} \approx -\text{Signal 2}$$

Acceleration in the Y-axis direction is determined by the following equations.

$$\text{Signal 1} = \text{Signal 2}$$

$$\text{Signal 3} = \text{Signal 4}$$

$$\text{Signal 1} \approx -\text{Signal 3}$$

Acceleration in Z-axis direction is determined by the following equation.

$$\text{Signal 1} = \text{Signal 2} = \text{Signal 3} = \text{Signal 4}$$

Acceleration signal proportionalities alpha ($\alpha$) and beta ($\beta$) are design specific sensitivities to acceleration conditions and s1 to s4 (the signals from the four corrugated membrane segments) described by the following equations.

$$a_x \propto \alpha(s1 + s3 - s2 - s4)$$

$$a_y \propto \alpha(s1 + s2 - s3 - s4)$$

$$a_z \propto \beta(s1 + s3 + s2 + s4)$$

Accelerometer 700 may be combined with a corrugated piezoelectric microphone 200 into a combined MEMS device if desired by combining one of the edges of holder 710 with one of the holders of corrugated piezoelectric microphone 200, if a single holder is used. If multiple holders 710 are used, accelerometer 700 may combined with a corrugated piezoelectric microphone 200 into a combined MEMS device combining one of the multiple holders 710 with one of the holders of corrugated piezoelectric microphone 200.

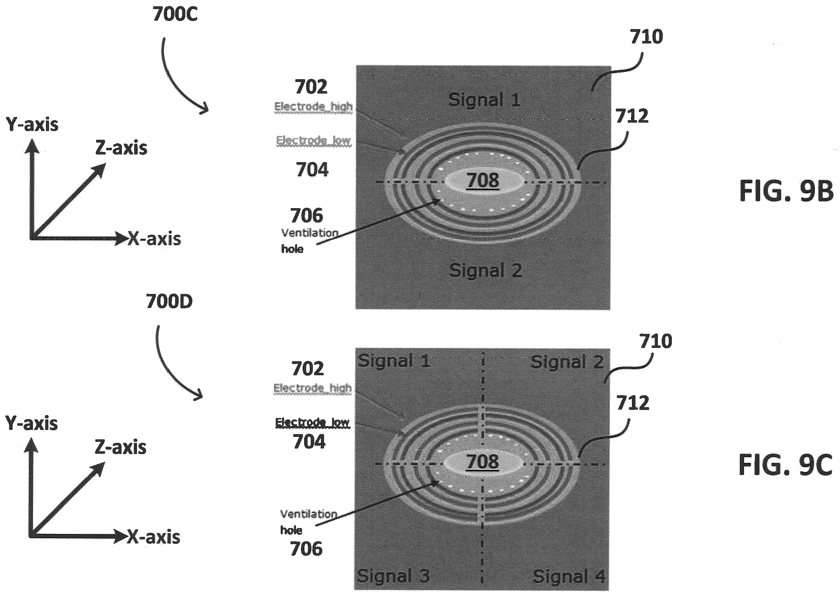

According to the invention, the corrugated membrane 712 has an oval shape, as is shown in Figures 9B and 9C and is described in further detail below. The embodiments shown in Figures 9B and 9C (as well as in Figure 9A) can all detect acceleration, but more generally can also detect vibrations including low frequency signals below or in a lower portion of the audio band. The embodiments shown in Figures 9B and 9C also comprise piezoelectric-type MEMS vibration sensors.

Figure 9B is a plan view of a MEMS vibration sensor 700C having corrugated membrane 712 for determining vibrations in an X-axis or Y-axis direction (in the plane of Figure 9B), and for determining vibrations in a Z-axis direction (orthogonal to the plane of Figure 9B), according to an embodiment. In an embodiment the high electrodes 702 are segmented into a first segmentation zone associated with a first output signal designated Signal 1. Similarly, the low electrodes 704 are segmented into the first segmentation zone associated with the first output signal designated Signal 1. In an embodiment the high electrodes 702 are segmented into a second segmentation zone associated with a second output signal designated Signal 2. Similarly the low electrodes 704 are segmented into the second segmentation zone associated with the second output signal designated Signal 2. In an embodiment the first and second segmentation zones correspond to equal sized halves of corrugated membrane 712. In an embodiment, corrugated membrane 712 comprises a plurality of ventilation holes 706 arranged in an oval pattern, although other ventilation structures and patterns can be used. In Figure 9B, an oval-shaped plan view of the inertial mass 708 is shown as being affixed or attached to corrugated membrane 712. In some embodiments, the shape of the inertial mass 708 can assume other shapes such as a circular shape. In Figure 9B, the holder 710 is shown to have an oval, elliptical, or oblong shape for attachment to corrugated membrane 712.

Acceleration signal proportionalities alpha ($\alpha$) and beta ($\beta$), described above, are design specific sensitivities to acceleration and vibration conditions and s1 and s2 (the signals from the two segmentation zones defined by Signal 1 and Signal 2) and are described by the following equations, wherein $a_{x/y}$ represents acceleration or vibrations in the X-axis direction or Y-axis direction, and wherein $a_z$ represents acceleration or vibrations in the Z-axis direction.

$$a_{x/y} \propto \alpha(s1 - s2)$$

$$a_z \propto \beta(s1 + s2)$$

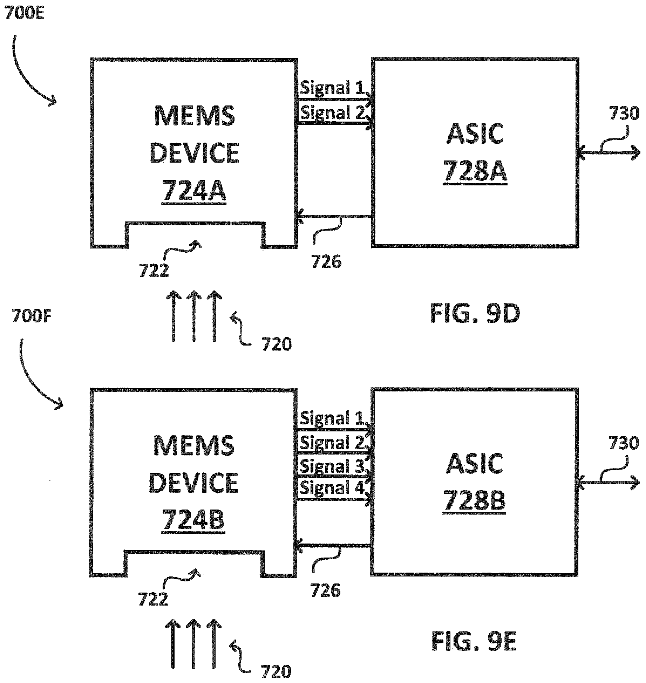

Thus, MEMS vibration sensor 700C can provide output signals responsive to X-axis and Y-axis acceleration and vibrations given the proper orientation of the sensor or if the orientation of the sensor can be determined. In Figure 9B, MEMS vibration sensor 700C is properly orientated for receiving vibrations in the Y-axis direction and is less sensitive to receiving vibrations in the X-axis direction. The output signals (Signal 1, Signal 2) of MEMS vibration sensor 700C are further processed in an ASIC, which is described in further detail below with respect to Figure 9D.

Figure 9C is a plan view of a MEMS vibration sensor 700D having corrugated membrane 712 for determining vibrations in three directions, according to an embodiment. In an embodiment the high electrodes 702 are segmented into a first segmentation zone associated with a first output signal designated Signal 1. Similarly, the low electrodes 704 are segmented into the first segmentation zone associated with the first output signal designated Signal 1. In an embodiment the high electrodes 702 are segmented into a second segmentation zone associated with a second output signal designated Signal 2. Similarly the low electrodes 704 are segmented into the second segmentation zone associated with the second output signal designated Signal 2. In an embodiment the high electrodes 702 are segmented into a third segmentation zone associated with a third output signal designated Signal 3. Similarly, the low electrodes 704 are segmented into the third segmentation zone associated with the third output signal designated Signal 3. In an embodiment the high electrodes 702 are segmented into a fourth segmentation zone associated with a fourth output signal designated Signal 4. Similarly the low electrodes 704 are segmented into the fourth segmentation zone associated with the fourth output signal designated Signal 4. In an embodiment the first, second, third, and fourth segmentation zones correspond to equal sized quadrants of corrugated membrane 712 having the oval, elliptical, or oblong shape. In an embodiment, corrugated membrane 712 comprises a plurality of ventilation holes 706 arranged in an oval pattern, although other ventilation structures and patterns can be used in embodiments. In Figure 9C, an oval-shaped plan view of the inertial mass 708 is shown as being affixed or attached to corrugated membrane 712. In some embodiments, the shape of the inertial mass 708 can assume other shapes such as a circular shape. In Figure 9C, the holder 710 is shown to have an oval, elliptical, or oblong shape for attachment to the corrugated membrane 712.

Acceleration signal proportionalities alpha ($\alpha$) and beta ($\beta$), described above, are design specific sensitivities to acceleration and vibration conditions and s1, s2, s3, and s4 (the signals from the four segmentation zones defined by Signal 1, Signal 2, Signal 3, and Signal 4) and are described by the following equations, wherein $a_{x/y}$ represents acceleration or vibrations in the X-axis direction or Y-axis direction, and wherein $a_z$ represents acceleration or vibrations in the Z-axis direction.

$$a_{x/y} \propto \alpha(s1 + s4 - s2 - s3)$$

$$a_z \propto \beta(s1 + s2 - s3 - s4)$$

MEMS vibration sensor 700D provides four signals s1, s2, s3, and s4 that can be further processed to provide output signals indicative of vibrations in the X-axis, Y-axis, and Z-axis directions. However, MEMS vibration sensor 700D is still more responsive to planar direction vibrations when properly orientated. Thus, MEMS vibration sensor 700D can provide output signals responsive to X-axis and Y-axis acceleration and vibrations given the proper orientation of the sensor or if the orientation of the sensor can be determined. In Figure 9C, MEMS vibration sensor 700D is properly orientated for receiving vibrations in the Y-axis direction and is less sensitive to receiving vibrations in the X-axis direction. The output signals (Signal 1, Signal 2, Signal 3, and Signal 4) of MEMS vibration sensor 700C are further processed in an ASIC, which is described in further detail below with respect to Figure 9E.

Figure 9D is a block diagram of a system 700E including a MEMS device 724A such as the MEMS vibration sensor 700C of Figure 9B coupled to an ASIC 728A for further processing signals Signal 1 and Signal 2. MEMS device 724 is shown as a packaged device having a port for access to low frequency pressure waves 720, in some embodiments. MEMS device 724A has two outputs for generating output signals Signal 1 and Signal 2 and an input 726 for receiving one or more bias voltages. ASIC 728A is configured for evaluating sums and/or differences of the output signals Signal 1 and Signal 2 in the manner described above to determine vibrations and/or acceleration in the X-axis, Y-axis, or Z-axis directions. ASIC 728A also includes a bus 730 for receiving control signals and other input signals, and for generating evaluation output data. MEMS device 724 can be integrated together with ASIC 728A on a single integrated circuit, or can be separate components fabricated together on a common substrate.

Figure 9E is a block diagram of a system 700F including a MEMS device 724B such as the MEMS vibration sensor 700D of Figure 9C coupled to an ASIC 728B for further processing signals Signal 1, Signal 2, Signal 3, and Signal 4. MEMS device 724 is shown as a packaged device having a port for access to low frequency pressure waves 720, in some embodiments. MEMS device 724B has four outputs for generating output signals Signal 1, Signal 2, Signal 3, and Signal 4 and input 726 for receiving one or more bias voltages. ASIC 728B is configured for evaluating sums and/or differences of the output signals Signal 1, Signal 2, Signal 3, and Signal 4 in the manner described above to determine vibrations and/or acceleration in the X-axis, Y-axis, or Z-axis directions. ASIC 728B also includes bus 730 for receiving control signals and other input signals, and for generating evaluation output data. MEMS device 724B can be integrated together with ASIC 728B on a single integrated circuit, or can be separate components fabricated together on a common substrate.

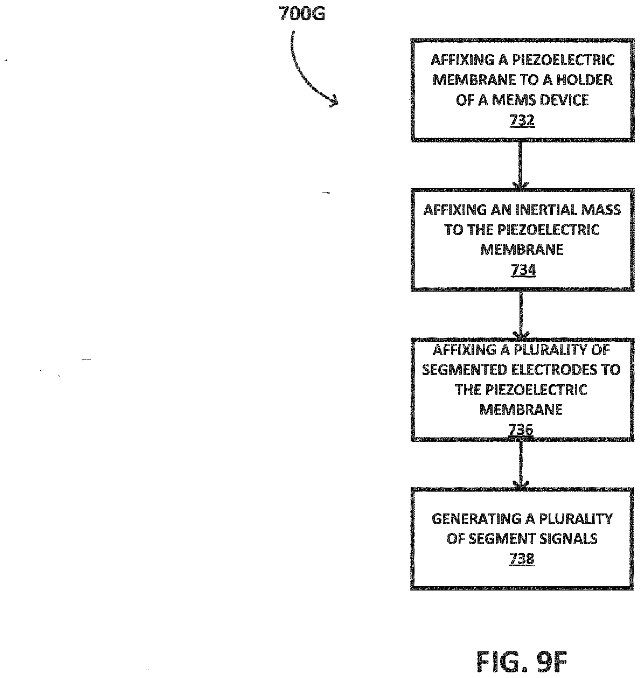

Figure 9F is a block diagram of a method 700G associated with the MEMS vibration sensor 700D of Figure 9C, according to an embodiment. Method 700G comprises affixing a piezoelectric membrane to a holder of a MEMS device at step 732; affixing an inertial mass to the piezoelectric membrane at step 734; affixing a plurality of segmented electrodes to the piezoelectric membrane at step 736; and using the segmented electrodes, generating a plurality of segment signals in response to an acceleration of the MEMS device at step 738. Method 700G can further comprise evaluating sums and/or differences of the plurality of segment signals. Method 700G can further comprise summing a first segment signal and a second segment signal from first and second segmented electrodes to provide a first sum; summing a third segment signal and a fourth segment signal from third and fourth segmented electrodes to provide a second sum; and calculating a difference between the first and second sums to generate a signal indicative of an X-axis acceleration of the MEMS device or a Y-axis acceleration of the MEMS device. Method 700G can further comprise calculating a difference between a first segment signal and a second segment signal to generate a signal indicative of an X-axis acceleration of the MEMS device or a Y-axis acceleration of the MEMS device. Method 700G can further comprise calculating a sum of a first segment signal and a second segment signal to generate a signal indicative of a Z-axis acceleration of the MEMS device.

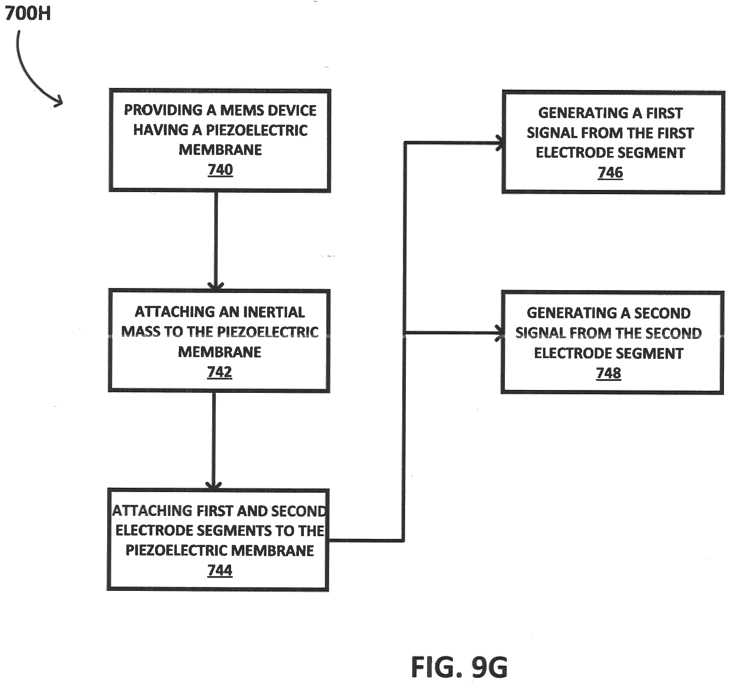

Figure 9G is a block diagram of a method 700H associated with the MEMS vibration sensor 700C of Figure 9B, according to an embodiment. Method 700H comprises providing a MEMS device having a piezoelectric membrane at step 740; attaching an inertial mass to the piezoelectric membrane at step 742; attaching first and second electrode segments to the piezoelectric membrane at step 744; generating a first signal from the first electrode segment at step 746; and generating a second signal from the second electrode segment at step 748. Method 700H can further comprise calculating a difference between first and second signals to generate a signal indicative of an acceleration of the MEMS device. Method 700H can further comprise orienting a major axis of the piezoelectric membrane to be substantially orthogonal to a planar acceleration direction of the MEMS device. Method 700H can further comprise calculating a sum of the first and second signals to generate a signal indicative of an acceleration of the MEMS device.

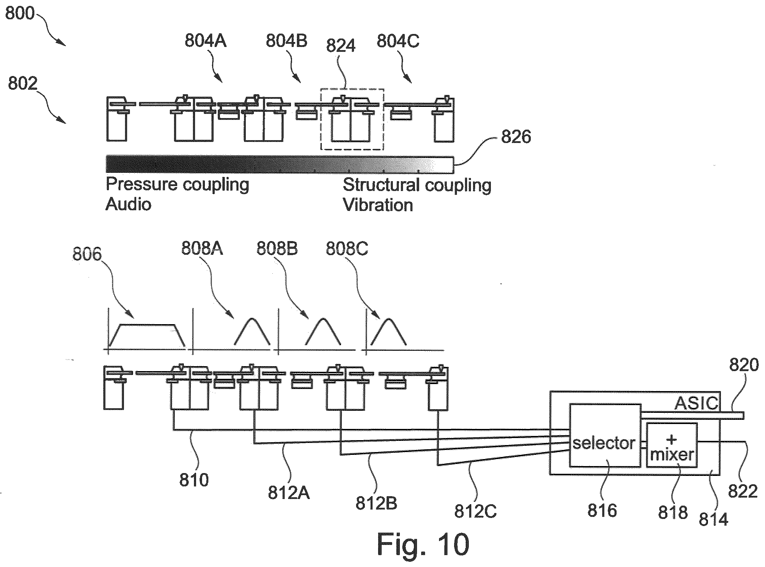

Figure 10 is a simplified cross-sectional view of a corrugated piezoelectric microphone combined with multiple corrugated piezoelectric vibration sensors having individual resonance frequencies according to an embodiment. In the simplified cross-sectional view of Figure 10, the corrugations in combined MEMS structure 800 are not actually shown for clarity.

In an embodiment, multiple corrugated piezoelectric vibration sensor devices with different resonance frequencies can be combined with a corrugated piezoelectric microphone. While individual devices can be used, the microphone and vibration sensors can all be coupled together to form a combined MEMS device using shared holders. Individual corrugated membranes can be used, or a single corrugated membrane extending to all of the devices can be used in embodiments. To achieve the different resonance frequencies, inertial masses of different weights can be used, or by shaping lateral corrugation membrane and weight dimensions, or both.

Figure 10 shows a combined MEMS structure 800 including a corrugated piezoelectric microphone 802, and a plurality of tuned corrugated piezoelectric vibration sensors, including corrugated piezoelectric vibration sensor 804A, corrugated piezoelectric vibration sensor 804B, and corrugated piezoelectric vibration sensor 804C. While three vibration sensors are shown, any number may be used in embodiments. While the corrugated microphone 802, and the corresponding piezoelectric vibration sensors are shown as individual MEMS devices, two or more of these devices can be merged using a merged holder 824 that may be made to be a single holder such as shared holder 524 shown in Figure 7, or shared holder 624 shown in Figure 8. Figure 10 also shows an audible frequency spectrum extending from the higher frequency audio signals from pressure coupling the combined MEMS structure 800 to outside pressure signals to the lower frequency vibration signals from the structural coupling of the combined MEMS structure to the outside environment. Figure 10 also shows the frequency response of each of the devices in the combined MEMS structure 800 including the corrugated piezoelectric microphone 802 frequency response 806, the corrugated vibration sensor 804A frequency response 808A, the corrugated vibration sensor 804B frequency response 808B, and the corrugated vibration sensor 804C frequency response 808C. An ASIC 814 is used to amplify the signals associated with combined MEMS structure 800. A selector circuit 816 of ASIC 814 includes a corrugated piezoelectric microphone input 810 coupled to corrugated piezoelectric microphone 802, a corrugated vibration sensor input 812A coupled to corrugated piezoelectric vibration sensor 804A, a corrugated vibration sensor input 812B coupled to corrugated piezoelectric vibration sensor 804B, and a corrugated vibration sensor input 812C coupled to corrugated piezoelectric vibration sensor 804C. In an embodiment, mixer circuit 818 can be used to combine the selector outputs at mixer output 822. Selector circuit 816 also includes a selector input 820 for controlling channel selection of selector circuit 816.

In summary, embodiments of a corrugated piezoelectric membrane microphone combined in a package with one or more corrugated piezoelectric membrane based vibration sensors using the same corrugated piezoelectric technology have been shown and described, suitable for usage in various applications including headphones or headset applications.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description.

**Claims**

1.  A MEMS vibration sensor (700) comprising:

    a piezoelectric membrane (712) comprising at least one electrode (702, 704) affixed to a holder (710) of the MEMS vibration sensor (700) and in electrical contact with a piezoelectric layer of the piezoelectric membrane (712); and
an inertial mass (708) affixed to the piezoelectric membrane (712),
wherein the piezoelectric membrane comprises an oval membrane,
wherein the piezoelectric membrane (712) comprises a corrugated membrane (712),
wherein the at least one electrode (702, 704) comprises a segmented electrode comprising two segmentation zones in the form of equal sized halves of the corrugated membrane (712) or four segmentation zones in the form of equal sized quadrants of the corrugated membrane (721),
wherein each electrode segment comprises one or more high electrode segments (702) provided at one or more undulation peaks (108) of the piezoelectric membrane (712) and one or more low electrode segments (704) provided at one or more undulation troughs (110) of the piezoelectric membrane (712),
wherein each segmentation zone has associated therewith a single evaluation signal (S1, S2, S3, S4).

2. The MEMS vibration sensor (700) of claim 1, wherein each segmentation zone is configured to generate the single signal, and wherein the vibration sensor (700) further comprising a circuit configured for evaluating sums and differences of the signals (S1-S4) associated with each segmentation zone.

3. The MEMS vibration sensor (700) of claim 2, wherein the circuit is configured for providing a first evaluation result indicative of an X-axis acceleration of the MEMS vibration sensor which is in plane with a surface of the piezoelectric membrane (712), and/or a second evaluation result indicative of a Y-axis acceleration of the MEMS vibration sensor which is orthogonal to the X- axis acceleration and in plane with the surface of the piezoelectric membrane (712), and/or a third evaluation result indicative of a Z-axis acceleration of the MEMS vibration sensor which is perpendicular to the surface of the piezoelectric membrane (712).

4. A method (700G, 700H) comprising:

affixing an oval shaped piezoelectric membrane to a holder of a MEMS device (732), the piezoelectric membrane (712) comprising a corrugated membrane (712);
affixing an inertial mass to the piezoelectric membrane (734);
affixing a segmented electrode to the piezoelectric membrane (736), the segmented electrode comprising two segmentation zones in the form of equal sized halves of the corrugated membrane (712) or four segmentation zones in the form of equal sized quadrants of the corrugated membrane (721), wherein each electrode segment comprises one or more high electrode segments (702) provided at one or more undulation peaks (108) of the piezoelectric membrane (712) and one or more low electrode segments (704) provided at one or more undulation troughs (110) of the piezoelectric membrane (712); and
using the segmented electrode to generating a plurality of segment signals in response to an acceleration of the MEMS device (738), wherein each segmentation zone has associated therewith a single segment signal (S1, S2, S3, S4).

5. The method (700G, 700H) of claim 4, further comprising evaluating sums and/or differences of the plurality of segment signals.

6. The method (700G) of claim 5, further comprising:

summing a first segment signal and a second segment signal from first and second electrode segments to provide a first sum;
summing a third segment signal and a fourth segment signal from third and fourth electrode segments to provide a second sum; and
calculating a difference between the first and second sums to generate a signal indicative of an X-axis acceleration of the MEMS device or a Y-axis acceleration of the MEMS device.

7. The method (700G, 700H) of claim 5, further comprising calculating a difference between a first segment signal and a second segment signal to generate a signal indicative of an X-axis acceleration of the MEMS device or a Y-axis acceleration of the MEMS device.

8. The method (700G, 700H) of claim 5, further comprising calculating a sum of a first segment signal and a second segment signal to generate a signal indicative of a Z-axis acceleration of the MEMS device.

9. The method (700H) of claim 5, wherein the segmented electrode comprising two segmentation zones in the from of equal sized halves of the corrugated membrane (712), the method (770H) further comprising calculating a difference between first and second signals to generate a signal indicative of an acceleration of the MEMS device, or calculating a sum of the first and second signals to generate a signal indicative of an acceleration of the MEMS device.

10. The method (700H) of claim 9, further comprising orienting a major axis of the piezoelectric membrane to be substantially orthogonal to a planar acceleration direction of the MEMS device.

**Patentansprüche**

1. Ein MEMS-Vibrationssensor (700), der folgende Merkmale aufweist:

   eine piezoelektrische Membran (712), die zumindest eine Elektrode (702, 704) aufweist, die an einem Halter (710) des MEMS-Vibrationssensors (700) befestigt ist und in elektrischem Kontakt mit einer piezoelektrischen Schicht der piezoelektrischen Membran (712) steht; und
   eine Trägheitsmasse (708), die an der piezoelektrischen Membran (712) befestigt ist,
   wobei die piezoelektrische Membran eine ovale Membran aufweist,
   wobei die piezoelektrische Membran (712) eine gewellte Membran (712) aufweist,
   wobei die zumindest eine Elektrode (702, 704) eine segmentierte Elektrode aufweist, die zwei Segmentierungszonen in der Form von gleich großen Hälften der gewellten Membran (712) oder vier Segmentierungszonen in der Form von gleich großen Quadranten der gewellten Membran (721) aufweist,
   wobei jedes Elektrodensegment ein oder mehrere hohe Elektrodensegmente (702), die an einer oder mehreren Wellenspitzen (108) der piezoelektrischen Membran (712) vorgesehen sind, und ein oder mehrere niedrige Elektrodensegmente (704) aufweist, die an einem oder mehreren Wellentälern (110) der piezoelektrischen Membran (712) vorgesehen sind,
   wobei jede Segmentierungszone ein einzelnes Auswertungssignal (S1, S2, S3, S4) aufweist, das derselben zugeordnet ist.

2. Der MEMS-Vibrationssensor (700) gemäß Anspruch 1, wobei jede Segmentierungszone dazu konfiguriert ist, das einzelne Signal zu erzeugen, und wobei der Vibrationssensor (700) ferner eine Schaltung aufweist, die dazu konfiguriert ist, Summen und Differenzen der Signale (S1-S4) auszuwerten, die jeder Segmentierungszone zugeordnet sind.

3. Der MEMS-Vibrationssensor (700) gemäß Anspruch 2, wobei die Schaltung dazu konfiguriert ist, ein erstes Auswertungsergebnis, das eine X-Achsen-Beschleunigung des MEMS-Vibrationssensors angibt, die in einer Ebene mit einer Oberfläche der piezoelektrischen Membran (712) ist, und/oder ein zweites Auswertungsergebnis, das eine Y-Achsen-Beschleunigung des MEMS-Vibrationssensors angibt, die orthogonal zu der X-Achsen-Beschleunigung und in einer Ebene mit der Oberfläche der piezoelektrischen Membran (712) ist, und/oder ein drittes Auswertungsergebnis bereitzustellen, das eine Z-Achsen-Beschleunigung des MEMS-Vibrationssensors angibt, die senkrecht zu der Oberfläche der piezoelektrischen Membran (712) ist.

4. Ein Verfahren (700G, 700H), das folgende Schritte aufweist:

   Befestigen einer ovalförmigen piezoelektrischen Membran an einem Halter einer MEMS-Vorrichtung (732), wobei die piezoelektrische Membran (712) eine gewellte Membran (712) aufweist;
   Befestigen einer Trägheitsmasse an der piezoelektrischen Membran (734);
   Befestigen einer segmentierten Elektrode an der piezoelektrischen Membran (736), wobei die segmentierte Elektrode zwei Segmentierungszonen in der Form von gleich großen Hälften der gewellten Membran (712) oder vier Segmentierungszonen in der Form von gleich großen Quadranten der gewellten Membran (721) aufweist, wobei jedes Elektrodensegment ein oder mehrere hohe Elektrodensegmente (702), die an einer oder mehreren Wellenspitzen (108) der piezoelektrischen Membran (712) vorgesehen sind, und ein oder mehrere niedrige Elektrodensegmente (704) aufweist, die an einem oder mehreren Wellentälern (110) der piezoelektrischen Membran (712) vorgesehen sind; und
   Verwenden der segmentierten Elektrode zum Erzeugen einer Mehrzahl von Segmentsignalen ansprechend auf eine Beschleunigung der MEMS-Vorrichtung (738), wobei jede Segmentierungszone ein einzelnes Segmentsignal (S1, S2, S3, S4) aufweist, das derselben zugeordnet ist.

5. Das Verfahren (700G, 700H) gemäß Anspruch 4, das ferner ein Auswerten von Summen und/oder Differenzen der Mehrzahl von Segmentsignalen aufweist.

6. Das Verfahren (700G) gemäß Anspruch 5, das ferner folgende Schritte aufweist:

   Summieren eines ersten Segmentsignals und eines zweiten Segmentsignals von ersten und zweiten Elektrodensegmenten, um eine erste Summe bereitzustellen;
   Summieren eines dritten Segmentsignals und eines vierten Segmentsignals von dritten und vierten Elektrodensegmenten, um eine zweite Summe bereitzustellen; und
   Berechnen einer Differenz zwischen der ersten und zweiten Summe, um ein Signal zu erzeugen, das eine X-Achsen-Beschleunigung der MEMS-Vorrichtung oder eine Y-Achsen-Beschleunigung der MEMS-Vorrichtung angibt.

7. Das Verfahren (700G, 700H) gemäß Anspruch 5, das ferner ein Berechnen einer Differenz zwischen einem ersten Segmentsignal und einem zweiten Segmentsignal aufweist, um ein Signal zu erzeugen, das eine X-Achsen-Beschleunigung der MEMS-Vorrichtung oder eine Y-Achsen-Beschleunigung der MEMS-Vorrichtung angibt.

8. Das Verfahren (700G, 700H) gemäß Anspruch 5, das ferner ein Berechnen einer Summe eines ersten Segmentsignals und eines zweiten Segmentsignals aufweist, um ein Signal zu erzeugen, das eine Z-Achsen-Beschleunigung der MEMS-Vorrichtung angibt.

9. Das Verfahren (700H) gemäß Anspruch 5, wobei die segmentierte Elektrode zwei Segmentierungszonen in der Form von gleich großen Hälften der gewellten Membran (712) aufweist, wobei das Verfahren (770H) ferner ein Berechnen einer Differenz zwischen ersten und zweiten Signalen aufweist, um ein Signal zu erzeugen, das eine Beschleunigung der MEMS-Vorrichtung angibt, oder ein Berechnen einer Summe der ersten und zweiten Signale aufweist, um ein Signal zu erzeugen, das eine Beschleunigung der MEMS-Vorrichtung angibt.

10. Das Verfahren (700H) gemäß Anspruch 9, das ferner ein Ausrichten einer Hauptachse der piezoelektrischen Membran dahingehend aufweist, im Wesentlichen orthogonal zu einer planaren Beschleunigungsrichtung der MEMS-Vorrichtung zu sein.

**Revendications**

1. Un capteur (700) de vibrations MEMS comprenant :

une membrane (712) piézoélectrique comprenant au moins une électrode (702, 704) attachée à un support (710) du capteur (700) de vibrations MEMS et en contact électrique avec une couche piézoélectrique de la membrane (712) piézoélectrique ; et
une masse (708) inertielle attachée à la membrane (712) piézoélectrique,
dans lequel la membrane piézoélectrique comprend une membrane ovale,
dans lequel la membrane (712) piézoélectrique comprend une membrane (712) ondulée,
dans lequel la au moins une électrode (702, 704) comprend une électrode segmentée comprenant deux zones de segmentation sous la forme de moitiés de mêmes dimensions de la membrane (712) ondulée ou quatre zones de segmentation sous la forme de cadrans de mêmes dimensions de la membrane (721) ondulée,
dans lequel chaque segment d'électrode comprend un ou plusieurs segments (702) hauts d'électrode prévus à un ou à plusieurs pics (108) d'ondulation de la membrane (712) piézoélectrique et un ou plusieurs segments (704) bas d'électrode prévus à un ou à plusieurs creux (110) de la membrane (712) piézoélectrique,
dans lequel chaque zone de segmentation a, associé à elle, un seul signal (S1, S2, S3, S4) d'évaluation.

2. Le capteur (700) de vibrations MEMS de la revendication 1, dans lequel chaque zone de segmentation est configurée pour créer le signal seul, et dans lequel le capteur (700) de vibrations comprend en outre un circuit configuré pour évaluer des sommes et des différences des signaux (S1-S4) associés à chaque zone de segmentation.

3. Le capteur (700) de vibrations MEMS de la revendication 2, dans lequel le circuit est configuré pour donner un premier résultat d'évaluation indicateur d'une accélération sur l'axe X du capteur de vibrations MEMS, qui est dans le plan d'une surface de la membrane (712) piézoélectrique, et/ou un deuxième résultat d'évaluation indicateur d'une accélération sur l'axe Y du capteur de vibrations MEMS, qui est orthogonale à l'accélération sur l'axe X et dans le plan d'une surface de la membrane (712) piézoélectrique, et/ou un troisième résultat d'évaluation indicateur d'une accélération suivant l'axe Z du capteur de vibrations MEMS, qui est perpendiculaire à la surface de la membrane (712) piézoélectrique.

4. Un procédé (700G, 700H) comprenant le fait de :

attacher une membrane piézoélectrique de forme ovale à un support d'un dispositif (732) MEMS, la membrane (712) piézoélectrique comprenant une membrane (712) ondulée ;
attacher une masse inertielle à la membrane (734) piézoélectrique ;
attacher une électrode segmentée à la membrane (736) piézoélectrique, l'électrode segmentée comprenant deux zones de segmentation sous la forme de moitiés de mêmes dimensions de la membrane (712) ondulée ou quatre zones de segmentation sous la forme de cadrans de mêmes dimensions de la membrane (721) ondulée, dans lequel chaque segment d'électrode comprend un ou plusieurs segments (702) hauts d'électrode prévus à un ou à plusieurs pics (108) d'ondulation de la membrane (712) piézoélectrique et un ou plusieurs segments (704) bas d'électrode prévus à un ou à plusieurs creux (110) de la membrane (712) piézoélectrique ; et

utiliser l'électrode segmentée pour créer une pluralité de signaux de segment en réponse à une accélération du dispositif (738) MEMS, dans lequel chaque zone de segmentation a, associé avec elle, un seul signal (S1, S2, S3, S4) de segment.

5. Le procédé (700G, 700H) de la revendication 4, comprenant en outre le fait d'évaluer des sommes et/ou des différences de la pluralité de signaux de segment.

6. Le procédé (700G) de la revendication 5, comprenant en outre le fait de :

sommer un premier signal de segment et un deuxième signal de segment provenant des premier et deuxième segments d'électrode pour donner une première somme ;

sommer un troisième signal de segment et un quatrième signal de segment provenant d'un troisième et d'un quatrième segment d'électrode pour donner une deuxième somme ; et

calculer une différence entre la première et la deuxième sommes pour créer un signal indicateur d'une accélération suivant l'axe X du dispositif MEMS ou d'une accélération suivant l'axe Y du dispositif MEMS.

7. Le procédé (700G, 700H) de la revendication 5, comprenant en outre le fait de calculer une différence entre un premier signal de segment et un deuxième signal de segment pour créer un signal indicateur d'une accélération suivant l'axe X du dispositif MEMS ou une accélération suivant l'axe Y du dispositif MEMS.

8. Le procédé (700G, 700H) de la revendication 5, comprenant en outre le fait de calculer une somme d'un premier signal de segment et d'un deuxième signal de segment pour créer un signal indicateur d'une accélération suivant l'axe Z du dispositif MEMS.

9. Le procédé (700H) de la revendication 5, dans lequel l'électrode segmentée comprend deux zones de segmentation sous la forme de moitiés de mêmes dimensions de la membrane (712) ondulée, le procédé (770H) comprenant en outre le fait de calculer une différence entre des premier et deuxième signaux pour créer un signal indicateur d'une accélération du dispositif MEMS, ou de calculer une somme des premier et deuxième signaux pour créer un signal indicateur d'une accélération du dispositif MEMS.

10. Le procédé (700H) de la revendication 9, comprenant une orientation d'un axe principal de la membrane piézoélectrique pour qu'il soit sensiblement orthogonal à une direction d'accélération dans un plan du dispositif MEMS.

Fig. 1

Fig. 2

Fig. 3

Fig. 4

Fig. 5

Fig. 6

Fig. 7

EP 4 109 927 B1

Fig. 8

FIG. 9A

EP 4 109 927 B1

FIG. 9B

FIG. 9C

EP 4 109 927 B1

700E

MEMS
DEVICE
724A

Signal 1
Signal 2

ASIC
728A

730

722

726

720

FIG. 9D

700F

MEMS
DEVICE
724B

Signal 1
Signal 2
Signal 3
Signal 4

ASIC
728B

730

722

726

720

FIG. 9E

700G

```
┌─────────────────────────────┐
│   AFFIXING A PIEZOELECTRIC   │
│   MEMBRANE TO A HOLDER       │
│   OF A MEMS DEVICE           │
│            732               │
└─────────────────────────────┘
              │
              ▼
┌─────────────────────────────┐
│  AFFIXING AN INERTIAL MASS   │
│   TO THE PIEZOELECTRIC       │
│         MEMBRANE             │
│            734               │
└─────────────────────────────┘
              │
              ▼
┌─────────────────────────────┐
│   AFFIXING A PLURALITY OF    │
│ SEGMENTED ELECTRODES TO      │
│     THE PIEZOELECTRIC        │
│         MEMBRANE             │
│            736               │
└─────────────────────────────┘
              │
              ▼
┌─────────────────────────────┐
│   GENERATING A PLURALITY     │
│   OF SEGMENT SIGNALS         │
│            738               │
└─────────────────────────────┘
```

FIG. 9F

EP 4 109 927 B1

700H

PROVIDING A MEMS DEVICE HAVING A PIEZOELECTRIC MEMBRANE 740

ATTACHING AN INERTIAL MASS TO THE PIEZOELECTRIC MEMBRANE 742

ATTACHING FIRST AND SECOND ELECTRODE SEGMENTS TO THE PIEZOELECTRIC MEMBRANE 744

GENERATING A FIRST SIGNAL FROM THE FIRST ELECTRODE SEGMENT 746

GENERATING A SECOND SIGNAL FROM THE SECOND ELECTRODE SEGMENT 748

FIG. 9G

Fig. 10

EP 4 109 927 B1

**EP 4 109 927 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3923602 A2
- US 2019016588 A
- US 2004020292 A
- US 20190016588 A